# EUROPEAN PATENT APPLICATION

(11) **EP 4 756 981 A1**
(43) Date of publication of application: **10.06.2026**
(21) Application number: 25749030.0
(22) Date of filing: 24.01.2025
(51) Int. Cl.: H01M 10/42, H01M 10/44

(54) **APPARATUS AND METHOD FOR MANAGING BATTERY**

(30) Priority: 30.01.2024 KR 20240014382
(71) Applicant: LG Energy Solution, Ltd., Seoul 07335 (KR)
(72) Inventor: JO, Vin-Na, Daejeon 34122 (KR); KIM, Ji-Hyun, Daejeon 34122 (KR)
(74) Representative: Goddar, Heinz J.
(86) International application number: PCT/KR2025/001519
(87) International publication number: WO 2025/165127

(57) **Abstract**

The battery management apparatus according to an embodiment of the present disclosure includes a charging unit electrically connected to a battery and configured to charge the battery; and a control unit configured to set a target capacity based on a battery capacity for the battery and a preset reference capacity, compare a charging capacity after a charge termination voltage of the battery with the target capacity, and transmit a charging command to the charging unit based on the comparison result.

## Description

### TECHNICAL FIELD

This application is based on and claims priority from Korean Patent Application No. 10-2024-0014382, filed on January 30, 2024, with the Korean Intellectual Property Office, the disclosure of which is incorporated herein in its entirety by reference.

The present disclosure relates to a battery management apparatus and method, and more specifically, to a battery management apparatus and method capable of increasing the lifespan of a battery.

### BACKGROUND ART

Recently, as the demand for portable electronic products such as laptops, video cameras, and mobile phones has increased rapidly and the development of electric vehicles, energy storage batteries, robots, and satellites has become full-fledged, research on high-performance batteries capable of repeated charging and discharging is actively being conducted.

Currently commercialized batteries include nickel cadmium batteries, nickel hydrogen batteries, nickel zinc batteries, and lithium batteries. Among these, lithium batteries are receiving attention due to their advantages such as the fact that they have almost no memory effect compared to nickel-based batteries, are free to charge and discharge, have a very low self-discharge rate, and have high energy density.

However, if lithium plating occurs on the negative electrode surface of the battery, it may cause side reactions with the electrolyte and changes in the kinetic balance of the battery, which may lead to battery degradation. If the battery is degraded due to lithium plating, the usable capacity of the battery decreases, which may shorten the lifespan of the battery. In addition, if a battery with lithium plating is operated under the same conditions, the degradation of the battery may be further accelerated.

### DISCLOSURE

### Technical Problem

The present disclosure is designed to solve the problems of the related art, and therefore the present disclosure is directed to providing a battery management apparatus and method capable of increasing the lifespan of a battery in which lithium plating has occurred.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A battery management apparatus according to one aspect of the present disclosure may comprise: a charging unit electrically connected to a battery and configured to charge the battery; and a control unit configured to set a target capacity based on a battery capacity for the battery and a preset reference capacity, compare a charging capacity after a charge termination voltage of the battery with the target capacity, and transmit a charging command to the charging unit based on the comparison result.

The control unit may be configured to calculate a capacity difference between the reference capacity and the battery capacity and set the target capacity based on the calculated capacity difference.

The control unit may be configured to set the target capacity to a value less than or equal to the capacity difference.

The control unit may be configured to compare a threshold capacity preset for a voltage section after the charge termination voltage of the battery with the capacity difference, and set the target capacity to a lower value among the threshold capacity and the capacity difference.

The control unit may be configured to transmit a charging command to the charging unit until the charging capacity reaches the target capacity.

The battery management apparatus according to another aspect of the present disclosure may further comprise a measuring unit configured to measure voltage and current of the battery during a charging process of the battery.

The control unit may be configured to calculate a capacity of the battery based on the current measured by the measuring unit.

The control unit may be configured to calculate the charging capacity based on a current measured from a time that the voltage of the battery reaches the charge termination voltage.

The control unit may be configured to calculate the battery capacity based on a current measured until the voltage of the battery reaches the charge termination voltage from a preset charge start voltage.

Available lithium of the battery may be lost compared to an initial state, so that the battery capacity is lower than the reference capacity.

A battery pack according to still another aspect of the present disclosure may comprise the battery management apparatus according to an aspect of the present disclosure.

A battery management method according to still another aspect of the present disclosure may comprise: a target capacity setting step of setting a target capacity based on a battery capacity for a battery and a preset reference capacity; a capacity comparing step of comparing a charging capacity after a charge termination voltage preset for the battery with the target capacity; and a charging command transmitting step of transmitting a charging command based on the comparison result of the capacity comparing step.

### Advantageous Effects

According to one aspect of the present disclosure, the battery management apparatus may increase the available capacity of a battery by forcibly oxidizing an electrolyte of a battery in which available lithium has been lost.

In addition, the battery management apparatus may prevent rapid degradation of the battery by restoring the distorted positive and negative electrode balance. In other words, the battery management apparatus has the advantage of increasing the expected lifespan of the battery.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically of a battery management apparatus according to an embodiment of the present disclosure.
FIG. 2 to FIG. 4 are schematic drawings illustrating positive and negative electrode profiles of a battery according to an embodiment of the present disclosure.
FIG. 5 is a schematic drawing of a battery pack according to another embodiment of the present disclosure.
FIG. 6 is a schematic drawing of a vehicle according to still another embodiment of the present disclosure.
FIG. 7 is a diagram schematically of a battery management method according to still another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

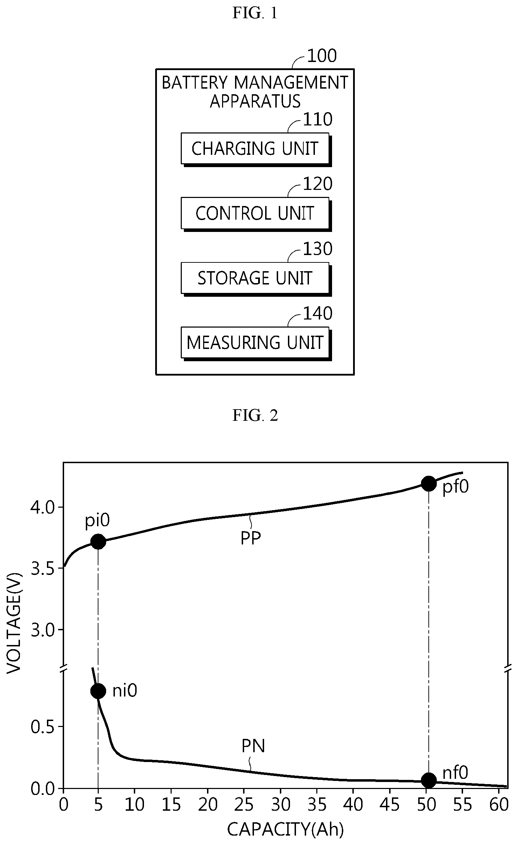

FIG. 1 is a diagram schematically showing a battery management apparatus 100 according to an embodiment of the present disclosure.

Referring to FIG. 1, the battery management apparatus 100 may include a charging unit 110 and a control unit 120.

The charging unit 110 may be electrically connected to the battery and configured to charge the battery.

Specifically, the charging unit 110 may be electrically connected to the positive electrode terminal and the negative electrode terminal of the battery. Then, the charging unit 110 may charge the battery by applying a charging current to the positive electrode terminal of the battery. For example, the charging unit 110 may charge the battery using at least one of a constant current (CC), a constant power (CP), and a pulse.

Here, a battery means a physically separable independent cell including a negative electrode terminal and a positive electrode terminal. For example, a lithium-ion battery or a lithium polymer battery may be considered a battery. Additionally, the type of battery may be cylindrical type, prismatic type, or pouch type. In addition, a battery may mean a battery bank, a battery module, or a battery pack in which a plurality of cells are connected in series and/or in parallel. Hereinafter, for convenience of explanation, a battery is described as meaning a single independent cell.

In particular, the battery may be configured to have a battery capacity lower than the reference capacity due to loss of available lithium compared to the initial state. In other words, the battery is a battery that has been degraded due to lithium plating. Here, the reference capacity refers to the initial capacity of a battery in the BOL (beginning of life) state, the initial capacity of a reference battery corresponding to the battery, or the initial capacity of a theoretically ideal battery. Hereinafter, for convenience of explanation, the reference capacity is described as the initial capacity of the battery.

FIG. 2 to FIG. 4 are schematic drawings illustrating positive and negative electrode profiles of a battery according to an embodiment of the present disclosure.

Specifically, FIG. 2 is a diagram schematically illustrating a positive electrode profile PP and a negative electrode profile PN of a battery in a BOL state. Here, the positive electrode profile PP is a profile representing a correspondence between the voltage and capacity of the positive electrode of the battery. The negative electrode profile PN is a profile representing a correspondence between the voltage and capacity of the negative electrode of the battery. Referring to FIG. 2, a capacity corresponding to the positive electrode participation start point pi0 and the negative electrode participation start point ni0 is 5 [Ah], and a capacity corresponding to the positive electrode participation end point pf0 and the negative electrode participation start point nf0 is 50 [Ah]. Therefore, the capacity of the battery according to the embodiment of FIG. 2 is 45 [Ah], which may be preset as a reference capacity of the battery.

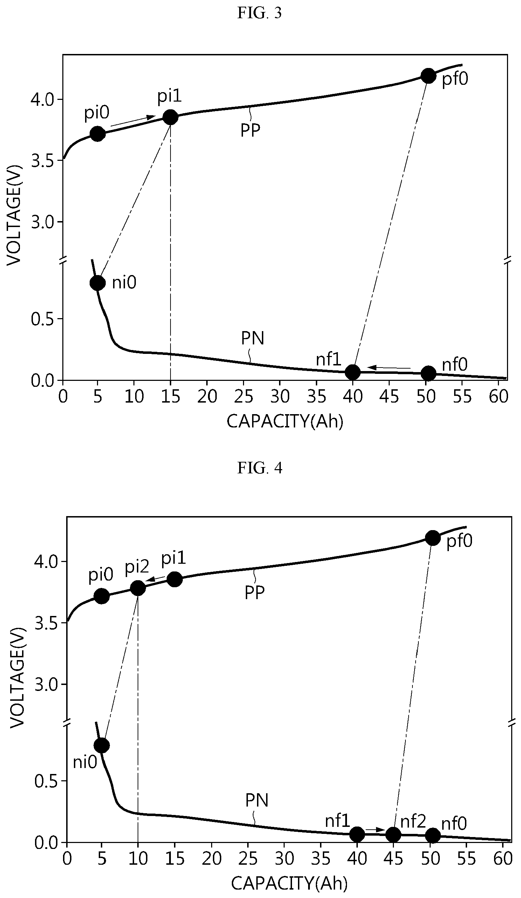

FIG. 3 is a schematic diagram illustrating the positive electrode profile PP and the negative electrode profile PN of a battery in which available lithium is lost. If available lithium is lost, lithium inserted into the crystal structure of the negative electrode material is reduced, so that the negative electrode participation end point may change from nf0 to nf1. In addition, the positive electrode participation start point may change from pi0 to pi1 symmetrically as much as the negative electrode participation end point nf1 is changed. That is, in the embodiment of FIG. 3, the capacity corresponding to the positive electrode participation start point pi1 is 15 [Ah], the capacity corresponding to the positive electrode participation end point pf0 is 50 [Ah], the capacity corresponding to the negative electrode participation start point ni0 is 5 [Ah], and the capacity corresponding to the negative electrode participation end point nf1 is 40 [Ah]. Therefore, the capacity of the battery according to the embodiment of FIG. 3 is 35 [Ah].

The control unit 120 may be configured to set a target capacity based on the battery capacity for the battery and a preset reference capacity.

Here, the battery capacity is the current capacity of the battery or the capacity to be diagnosed. For example, in the embodiment of FIG. 2, the reference capacity of the battery is preset to 45 [Ah]. And, in the embodiment of FIG. 3, the battery capacity of the battery is 35 [Ah].

The control unit 120 may be configured to calculate the capacity difference between the reference capacity and the battery capacity.

Specifically, the control unit 120 may calculate the capacity difference according to the formula "|reference capacity - battery capacity|". Here, "∥" is a symbol indicating an absolute value.

For example, in the embodiments of FIGS. 2 and 3, the reference capacity is 45 [Ah] and the battery capacity is 35 [Ah]. Therefore, the control unit 120 may calculate the formula of "45 - 35" to derive the capacity difference as 10 [Ah].

The control unit 120 may be configured to set the target capacity based on the calculated capacity difference.

Specifically, the control unit 120 can be configured to set the target capacity to a value less than or equal to the capacity difference. For example, if the calculated capacity difference is n (n is a natural number), the control unit 120 may set the target capacity in a range greater than or equal to 0 and less than or equal to n.

In the previous embodiment, since the calculated capacity difference is 10 [Ah], the control unit 120 may set the target capacity within the range of 0 [Ah] to 10 [Ah]. In the following, for convenience of explanation, it is explained that control unit 120 sets the target capacity to 5 [Ah].

The control unit 120 may be configured to compare the charging capacity after the charge termination voltage of the battery with the target capacity.

Specifically, the battery may continue to be charged even if the voltage exceeds the preset charge termination voltage. The capacity that is charged from the time the voltage of the battery reaches the charge termination voltage is the charging capacity of the battery.

For example, it is assumed that the charge termination voltage of the battery is set to 4.2 [V] and the voltage of the battery is charged to 4.3 [V]. The capacity charged until the voltage of the battery reaches from 4.2 [V] to 4.3 [V] is the charging capacity of the battery.

The control unit 120 may compare the size of the charging capacity and the target capacity. For example, the control unit 120 may compare the charging capacity and the target capacity and determine that the charging capacity is less than or equal to the target capacity. As another example, the control unit 120 may compare the charging capacity and the target capacity and determine that the charging capacity is equal to the target capacity.

In the embodiment of FIG. 3, it is assumed that the target capacity is set to 5 [Ah]. The control unit 120 may compare the charging capacity of the battery with the target capacity (5 [Ah]).

The control unit 120 may be configured to transmit a charging command to the charging unit 110 based on the comparison result.

Specifically, the control unit 120 may be configured to transmit a charging command to the charging unit 110 until the charging capacity reaches the target capacity. In other words, the control unit 120 may not transmit a charging command to the charging unit 110 if the charging capacity is equal to the target capacity. That is, if the charging capacity is equal to the target capacity, charging by the charging unit 110 may be terminated.

In the embodiment of FIG. 3, the control unit 120 may transmit a charging command to the charging unit 110 if the charging capacity of the battery is less than the target capacity (5 [Ah]). In addition, the control unit 120 may not transmit the charging command to the charging unit 110 if the charging capacity of the battery reaches the target capacity (5 [Ah]). At this time, charging of the battery may be terminated.

FIG. 4 is a diagram schematically illustrating the positive electrode profile PP and the negative electrode profile PN of the battery after charging is terminated. Specifically, in the embodiment of FIG. 4, the charging capacity of the battery reaches the target capacity (5 [Ah]), and thus charging of the battery is terminated. When the battery is charged to a voltage section after the charge termination voltage, the electrolyte may be oxidized. Due to the electrolyte oxidation reaction, the positive electrode participation start point shifts to the low potential side, and correspondingly, the negative electrode participation end point shifts to the high potential side. That is, the positive electrode participation start point may change from pi1 to pi2, and the negative electrode participation end point may change from nf1 to nf2. The capacity of the battery according to the embodiment of FIG. 4 may be 40 [Ah], which may increase from the capacity (35 [Ah]) of the battery according to the embodiment of FIG. 3.

The battery management apparatus 100 may increase the available capacity of a battery by forcibly oxidizing the electrolyte of a battery in which available lithium has been lost.

In addition, the battery management apparatus 100 may prevent rapid degradation of the battery by restoring the distorted positive and negative electrode balance. For example, referring to FIGS. 3 and 4, the positive and negative electrode balance of FIG. 3 is more distorted than the positive and negative electrode balance of FIG. 4. If the battery of FIG. 3 is operated without the positive and negative electrode balance being restored, the battery may be degraded more rapidly than the battery (FIG. 4) in which the positive and negative electrode balance is restored by the battery management apparatus 100. Therefore, the battery management apparatus 100 has an advantage of increasing the expected lifespan of the battery.

Meanwhile, the control unit 120 provided in the battery management apparatus 100 may selectively include processors known in the art, application-specific integrated circuits (ASICs), other chipsets, logic circuits, registers, communication modems, data processing devices, and the like to execute various control logic performed in the present disclosure. Also, when the control logic is implemented in software, the control unit 120 may be implemented as a set of program modules. At this time, the program module may be stored in a memory and executed by the control unit 120. The memory may be located inside or out of the control unit 120 and may be connected to the control unit 120 by various well-known means.

In addition, the battery management apparatus 100 may further include a storage unit 130. The storage unit 130 may store data necessary for operation and function of each component of the battery management apparatus 100, data generated in the process of performing the operation or function, or the like. The storage unit 130 is not particularly limited in its type as long as it is a known information storage means that can record, erase, update and read data. As an example, the information storage means may include RAM, flash memory, ROM, EEPROM, registers, and the like. In addition, the storage unit 130 may store program codes in which processes executable by the control unit 120 are defined.

For example, the storage unit 130 may store setting information such as the reference capacity, the charge termination voltage, and the threshold capacity of the battery. Additionally, the storage unit 130 may store information about the voltage and current of the battery measured by the measuring unit 140.

In one embodiment, the control unit 120 may be configured to compare a threshold capacity preset for a voltage section after the charge termination voltage of the battery with a capacity difference.

Specifically, the threshold capacity may be preset as the capacity of the positive electrode of the battery. If the designed positive electrode capacity is 55 [Ah] and the positive electrode capacity corresponding to the charge termination voltage is 50 [Ah], the threshold capacity is 5 [Ah].

The control unit 120 may be configured to set the target capacity to a lower value among the threshold capacity and the capacity difference.

The control unit 120 may compare the threshold capacity and the capacity difference. If the threshold capacity is less than the capacity difference, the control unit 120 may set the threshold capacity to the target capacity. Conversely, if the threshold capacity exceeds the capacity difference, the control unit 120 may set the capacity difference to the target capacity.

It is assumed that the target capacity is set to a value greater than the threshold capacity, and the battery is charged until the charging capacity of the battery reaches the target capacity. Since the battery is charged more than the preset threshold capacity, a strong stress is applied to the positive electrode of the battery, which may result in a loss of capacity on the high potential side of the positive electrode. For example, the positive electrode participation end point may shift to the low potential side due to positive electrode degradation. Therefore, the battery management apparatus 100 may prevent the positive electrode from being unnecessarily degraded by setting the target capacity in consideration of the threshold capacity and the calculated capacity difference.

Referring to FIG. 1, the battery management apparatus 100 may further include a measuring unit 140.

The measuring unit 140 may be configured to measure the voltage and current of the battery during the charging process of the battery.

Specifically, the measuring unit 140 may be connected to the positive electrode terminal and the negative electrode terminal of the battery. The measuring unit 140 may measure the positive electrode potential from the positive electrode terminal of the battery, and may measure the negative electrode potential from the negative electrode terminal of the battery. In addition, the measuring unit 140 may measure the voltage of the battery by calculating the difference between the positive electrode potential and the negative electrode potential.

In addition, the measuring unit 140 may be connected to the charge/discharge path of the battery. Here, the charge/discharge path is a large current path through which the charge current and discharge current of the battery flow. The measuring unit 140 may measure the current of the battery by measuring the charge current (or discharge current) flowing in the charge/discharge path.

The measuring unit 140 may be connected to the control unit 120 via wires and/or wirelessly to enable communication. In addition, the measuring unit 140 may transmit information about the voltage and current of the battery to the control unit 120.

The control unit 120 may be configured to calculate the capacity of the battery based on the current measured by the measuring unit 140.

Specifically, the control unit 120 may calculate the capacity of the battery based on the current information received from the measuring unit 140. For example, the control unit 120 may calculate the capacity of the battery using a current integration method (coulomb counting method, ampere counting method).

The control unit 120 may be configured to calculate the battery capacity based on the measured current until the voltage of the battery reaches the charge termination voltage from the preset charge start voltage. For example, the control unit 120 may calculate the battery capacity by integrating the measured current until the voltage of the battery reaches the charge termination voltage. In addition, the control unit 120 may compare the calculated battery capacity with a reference capacity to calculate a capacity difference, and set a target capacity based on the calculated capacity difference.

In addition, the control unit 120 may be configured to calculate the charging capacity based on the current measured from the time when the voltage of the battery reaches the charge termination voltage. For example, the control unit 120 may calculate the charging capacity by integrating the current measured from the time when the voltage of the battery reaches the charge termination voltage. The control unit 120 may compare the calculated charging capacity with a set target capacity, and control the charging of the battery based on the comparison result.

The battery management apparatus 100 may control the charging of the battery by directly measuring the voltage and current of the battery. That is, the battery management apparatus 100 may increase the expected lifespan of the battery by reflecting the current state of the battery.

The battery management apparatus 100 according to the present disclosure may be applied to a BMS (Battery Management System). That is, the BMS according to the present disclosure may include the battery management apparatus 100 described above. In this configuration, at least some of the components of the battery management apparatus 100 may be implemented by supplementing or adding functions of the components included in the conventional BMS. For example, the charging unit 110, the control unit 120, the storage unit 130 and the measuring unit 140 of the battery management apparatus 100 may be implemented as components of the BMS.

In addition, the battery management apparatus 100 according to the present disclosure may be provided in a battery pack. That is, the battery pack according to the present disclosure may include the above-described battery management apparatus 100 and one or more battery cells. In addition, the battery pack may further include electrical equipment (relays, fuses, etc.) and a case.

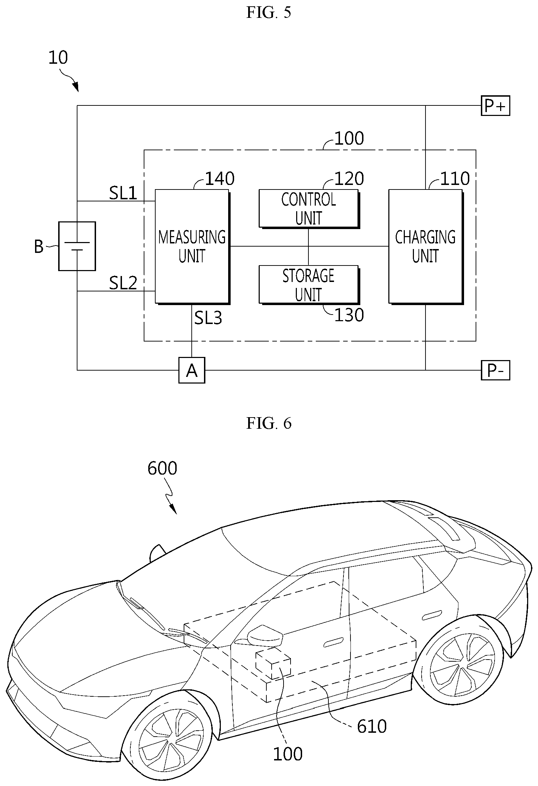

FIG. 5 is a schematic drawing of a battery pack according to another embodiment of the present disclosure.

The positive electrode terminal of the battery B may be connected to the positive electrode terminal P+ of the battery pack 1, and the negative electrode terminal of the battery B may be connected to the negative electrode terminal P- of the battery pack 1.

A measuring unit 140 may be connected to a first sensing line SL1, a second sensing line SL2, and a third sensing line SL3. Specifically, the measuring unit 140 may be connected to a positive electrode terminal of the battery B through the first sensing line SL1, and may be connected to a negative electrode terminal of the battery B through the second sensing line SL2. The measuring unit 140 may measure the voltage of the battery B based on the voltage measured at each of the first sensing line SL1 and the second sensing line SL2.

In addition, the measuring unit 140 may be connected to an ampere meter A through the third sensing line SL3. For example, the ampere meter A may be an ammeter or a shunt resistor capable of measuring the charging current and the discharging current of the battery B.

An external device may be connected to the positive electrode terminal P+ and the negative electrode terminal P- of the battery pack 1. For example, the external device may be a charging device or a load. In addition, the positive electrode terminal of the battery B, the positive electrode terminal P+ of the battery pack 1, the external device, the negative electrode terminal P- of the battery pack 1, and the negative electrode terminal of the battery B may be electrically connected.

FIG. 6 is a schematic drawing of a vehicle according to still another embodiment of the present disclosure.

Referring to FIG. 6, the battery pack according to an embodiment of the present disclosure may be included in a vehicle 600, such as an electric vehicle (EV) or a hybrid vehicle (HV). In addition, the battery pack 610 may drive the vehicle 600 by supplying power to a motor through an inverter provided in the vehicle 600. Here, the battery pack 610 may include the battery management apparatus 100. That is, the vehicle 600 may include the battery management apparatus 100. In this case, the battery management apparatus 100 may be an onboard device included in the vehicle 600.

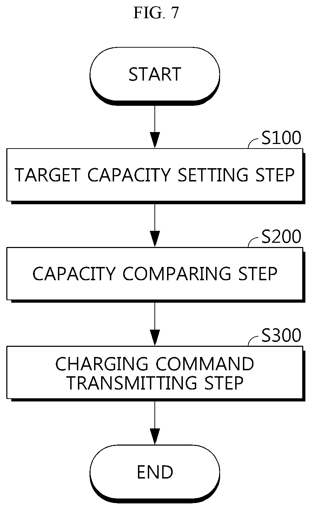

FIG. 7 is a diagram schematically showing a battery management method according to still another embodiment of the present disclosure.

Referring to FIG. 9, the battery management method may include a target capacity setting step (S100), a capacity comparing step (S200) and a charging command transmitting step (S300).

Preferably, each step of the battery management method may be performed by the battery management apparatus 100. Hereinafter, for convenience of explanation, contents overlapping with the previously described contents will be omitted or briefly described.

The target capacity setting step (S100) is a step of setting the target capacity based on the battery capacity for the battery and a preset reference capacity, and may be performed by the control unit 120.

The control unit 120 may be configured to calculate a capacity difference between the reference capacity and the battery capacity. The control unit 120 may be configured to set a target capacity based on the calculated capacity difference.

The capacity comparing step (S200) is a step of comparing the charging capacity after the charge termination voltage of the battery and the target capacity, and may be performed by the control unit 120.

The control unit 120 may compare the size of the charging capacity and the target capacity. For example, the control unit 120 may compare the charging capacity and the target capacity and determine that the charging capacity is less than or equal to the target capacity. As another example, the control unit 120 may compare the charging capacity and the target capacity and determine that the charging capacity is equal to the target capacity.

The charging command transmitting step (S300) is a step of transmitting a charging command based on the comparison result of the capacity comparing step (S200), and may be performed by the control unit 120.

Specifically, the control unit 120 may be configured to transmit a charging command to the charging unit 110 until the charging capacity reaches the target capacity. In other words, the control unit 120 may not transmit a charging command to the charging unit 110 if the charging capacity is equal to the target capacity. That is, if the charging capacity is equal to the target capacity, charging by the charging unit 110 may be terminated.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Explanation of reference signs)

10: battery pack
100: battery management apparatus
110: charging unit
120: control unit
130: storage unit
140: measuring unit
600: vehicle
610: battery pack

## Claims

1. A battery management apparatus, comprising:
a charging unit electrically connected to a battery and configured to charge the battery; and
a control unit configured to set a target capacity based on a battery capacity for the battery and a preset reference capacity, compare a charging capacity after a charge termination voltage of the battery with the target capacity, and transmit a charging command to the charging unit based on the comparison result.

2. The battery management apparatus according to claim 1,
wherein the control unit is configured to calculate a capacity difference between the reference capacity and the battery capacity and set the target capacity based on the calculated capacity difference.

3. The battery management apparatus according to claim 2,
wherein the control unit is configured to set the target capacity to a value less than or equal to the capacity difference.

4. The battery management apparatus according to claim 2,
wherein the control unit is configured to compare a threshold capacity preset for a voltage section after the charge termination voltage of the battery with the capacity difference, and set the target capacity to a lower value among the threshold capacity and the capacity difference.

5. The battery management apparatus according to claim 1,
wherein the control unit is configured to transmit a charging command to the charging unit until the charging capacity reaches the target capacity.

6. The battery management apparatus according to claim 1, further comprising:
a measuring unit configured to measure voltage and current of the battery during a charging process of the battery,
wherein the control unit is configured to calculate a capacity of the battery based on the current measured by the measuring unit.

7. The battery management apparatus according to claim 6,
wherein the control unit is configured to calculate the charging capacity based on a current measured from a time that the voltage of the battery reaches the charge termination voltage.

8. The battery management apparatus according to claim 6,
wherein the control unit is configured to calculate the battery capacity based on a current measured until the voltage of the battery reaches the charge termination voltage from a preset charge start voltage.

9. The battery management apparatus according to claim 1,
wherein available lithium of the battery is lost compared to an initial state, so that the battery capacity is lower than the reference capacity.

10. A battery pack comprising the battery management apparatus according to any one of claims 1 to 9.

11. A battery management method comprising:
a target capacity setting step of setting a target capacity based on a battery capacity for a battery and a preset reference capacity;
a capacity comparing step of comparing a charging capacity after a charge termination voltage preset for the battery with the target capacity; and
a charging command transmitting step of transmitting a charging command based on the comparison result of the capacity comparing step.
